# EUROPÄISCHE PATENTSCHRIFT

(11) **EP 1 932 677 B1**
(45) Veröffentlichungstag und Bekanntmachung des Hinweises auf die Patenterteilung: **05.12.2012**
(21) Anmeldenummer: 07024014.8
(22) Anmeldetag: 11.12.2007
(51) Int. Cl.: B41M 5/52, B41M 5/41

(54) **Tragbarer Datenträger**
Portable data carrier
Support de données portable

(30) Priorität: 15.12.2006 DE 102006059855
(43) Veröffentlichungstag der Anmeldung: 18.06.2008
(73) Patentinhaber: Giesecke & Devrient GmbH, 81677 München (DE); Sukano Management+Services AG, 8834 Schindellegi (CH)
(72) Erfinder: Riedl, Josef, 83395 Attenkirchen (DE); Ganz, Daniel, 6417 Sattel (CH); Frei, Willy, 6006 Luzern (CH); Schanzer, Christian, 7323 Wangs (CH)

(56) Entgegenhaltungen:
- WO-A-2005/042242
- WO-A-2006/133953
- DE-A1- 10 057 231
- GB-A- 2 344 785
- JP-A- 2004 025 743

## Beschreibung

Gegenstand der Erfindung ist die Aufbringung von graphischer Information auf einen tragbaren Datenträger mittels eines Thermographieverfahrens. Insbesondere richtet sich die Erfindung auf die Thermopersonalisierung von Identifikationskarten wie Bankkarten, Führerscheinen oder Ausweisen.

Ein tragbarer Datenträger mit einer Bildempfangsschicht, die durch ein Thermotransferverfahren bedruckbar ist, ist aus der US 2005/0035590 bekannt. Der darin beschriebene tragbare Datenträger hat die Gestalt eines I-dentifikationsdokumentes und basiert auf einer Kernschicht, die u.a. aus Polycarbonat oder Polyethylenterephtalat (PET) bestehen kann, auf welche eine Laminierschicht aufgebracht ist, die aus einem transparenten Material besteht wie etwa Polycarbonat, Polypropylen, ABS-Copolyester oder thermischem Kunststoff. Auf die Laminierschicht ist eine Bildempfangsschicht aufgebracht, die sich insbesondere zum Bedrucken durch Thermosublimation, auch als D2T2 ("Die Diffusion Thermal Transfer") bekannt, eignet. Die Bildempfangsschicht besteht aus Polyvinylchlorid (PVC); daneben wird eine Vielzahl möglicher Alternativmaterialien angegeben, u. a. Polystyrol und seine Copolymere. Die vorgeschlagene Karte gestattet ein zuverlässiges Bedrucken durch Thermosublimation. Allerdings ist das für die Bildaufnahmeschicht verwendete PVC hinsichtlich seiner Umweltvertäglichkeit und seiner Recyclebarkeit problematisch. PVC-beschichtete Karten besitzen zudem eine verhältnismäßig geringe Haltbarkeit, was ihre Eignung für langlebige Anwendungen, wie etwa Ausweiskarten, beeinträchtigt.

Aus der EP 0 734 322 B1 ist ein mehrschichtiger Datenträger bekannt, der aus einer opaken Kernschicht besteht, auf welche beidseitig jeweils mit einer Deckschicht von modifiziertem Polyester (PETG) abgedeckt ist. In die PETG-Schicht werden mittels eines Lasers Daten eingebracht. Insbesondere zur Verbesserung Ihrer Eignung zur Beschriftung mittels Laser können den PETG-Schichten Zusatzstoffe beigegeben sein. Die Verbindung der Schichten erfolgt durch laminieren. Um dabei ein Anhaften der Deckschichten an dem Laminierwerkzeug zu verhindern, werden die Deckschichten an den Außenseiten mit Anti-Blockmitteln angereichert. Die Deckschichten werden dabei als zweilagiger Schichtenverbund durch Coextrusion einer mit Antiblockmittel angereicherten PETG-Lage und einer aus reinem PETG bestehenden Lage gewonnen. Aus dem Patent Abstracts of Japan JP 2004042358 A ist eine Bildempfangsschicht bekannt, die zur Aufnahme von Druckmustern geeignet ist, die durch Thermosublimation aufgebracht werden. Die vorgeschlagene Bildaufnahmeschicht besteht aus einer Kernschicht, auf die eine Wärmeisolationsschicht aus Polystyrol aufgebracht ist, auf der wiederum sich eine Akzeptorschicht befindet, welche ein färbbares Harz enthält. Die Bildaufnahmeschicht soll insbesondere für IC-Karten eingesetzt werden.

Aus der WO 02/41245 A2 ist desweiteren ein mulitfunktionaler Kartenkörper bekannt, der durch Lamination mehrerer Schichten gebildet ist, wobei wenigstens eine der Schichten durch Coextrusion aus wenigstens zwei Kunststoffen erzeugt wurde. Als Ausgangsmaterial für die coextrudierte Schicht wird u.a. PETG vorgeschlagen.

Aus der JP 2004025743 A ist weiterhin eine für das Drucken mittels Transferthermographie geeignete Plastikkarte bekannt, die einer zunehmenden Nachfrage nach nicht-PVC-Karten gerecht wird. Vorgeschlagen wird eine Karte mit einer auf ABS, PETG oder Polycarbonat basierenden Kernschicht und einer auf denselben Materialien basierenden Überschicht, die dabei jedoch einen Anteil von mindestens 20 Gew. % ABS enthält. Derartige ABShaltige Bildempfangsschichten erwiesen sich in eigenen Versuchen bei Anwendung in Verbindung mit Thermosublimationsverfahren als nicht zufriedenstellend.

Aus der GB 2 344 785 A1 ist ferner ein aus einer Polyesterträgerschicht und einer darauf aufgebrachten leitfähigen Schicht bestehender Schichtaufbau bekannt. Die leitfähige Schicht besitzt eine Schichtdicke zwischen 0,1 und 1,2 mm und besteht aus einem Gemisch von Polyester, Polystyrol und vor allem aus besonderen zugesetzten Stoffen, insbesondere Kohlenstoff, die die Leitfähigkeit bewirken.

Um die Ausbildung von Materialerhebungen beim Stanzen zu vermeiden und um die Temperaturfestigkeit zu verbessern, ist aus der JP 11189708 A weiter ein Vorschlag zur Verbesserung der Härte von Kartenmaterial bekannt, der berücksichtigt, daß PVC enthaltende Karten aus Umweltschutzgründen zukünftig weniger akzeptiert werden. Vorgeschlagen wird die Verwendung eines Materialgemisches aus PETG und Polycarbonat, wobei das PETG zu einem Anteil von 10% bis 70 % durch andere Materialien modifiziert wird. Als Modifikationsmaterial wird u.a. AAS (Methacrylat -Acryl-Styrol) genannt. Das vorgeschlagene Material besitzt gute mechanische Eigenschaften, ist aber nicht ohne weiteres für mehrschichtige, laminierte Kartenkörperaufbauten geeignet.

Aus der nur nach Art. 54 (3) EPÜ zu berücksichtigenden WO 2006/133953 A1 ist eine Karte mit einer zur Aufnahme von durch Transferthermographie übertragbare graphische Information besonders geeignete Bildempfangsschicht bekannt, die als Schichtenverbund aus einer Akzeptorschicht und einer Trägerschicht ausgebildet ist. Die Trägerschicht besteht im wesentlichen aus einem amorphen Polyester, die Akzeptorschicht aus einem Gemisch eines Polyesters mit wenigstens 10 Gew. % Polystyrol. Zur optischen Beschaffenheit der Bildempfangsschicht macht die Schrift keine Angaben. Der Erfindung liegt die Aufgabe zugrunde, eine zur Aufbringung auf tragbare Datenträger geeignete Bildempfangsschicht auf Polyesterbasis anzugeben, auf die durch Transferthermographie, insbesondere durch Thermosublimation graphische Information aufgebracht werden kann.

Diese Aufgabe wird gelöst durch einen tragbaren Datenträger mit den Merkmalen des Anspruchs 1 sowie einem Verfahren zur Herstellung eines tragbaren Datenträgers mit den Merkmalen des unabhängigen Anspruchs 9. Der erfindungsgemäße tragbare Datenträger zeichnet sich dadurch aus, daß er eine transparente Bildempfangsschicht aufweist, die eine Trägerschicht aus PETG sowie eine Akzeptorschicht aus einem Gemisch von PETG mit einem Anteil von 10 Gew.-% bis 90% eines Polymers aus der Gruppe der amorphen Styrol-Copolymere umfaßt. Die transparente Ausführung der Bildempfangsschicht erlaubt es in vorteilhafter Weise auf der Kernschicht eines Datenträgers eine Designinformation aufzubringen, die durch die Bildempfangsschicht hindurch sichtbar ist und dadurch ein Echtheitsmerkmal für den Datenträger bildet.

Die Bildempfangsschicht kann zuverlässig bildpunktweise in einem Transferthermographieverfahren mit graphischer Information versehen werden, wobei sie sich gleichermaßen für das Thermotransfer- wie für das Thermosublimationsverfahren eignet. Zur Durchführung der Transferthermographie können dabei übliche Anlagen eingesetzt werden; spezielle Anpassungen zur Anwendung für tragbare Datenträger sind nicht erforderlich. Der erfindungsgemäße tragbare Datenträger hat den Vorteil, daß bei Verwendung des Thermotransferverfahrens das eingesetzte Farbträgerband nicht an der Bildempfangsschicht haftet. Es entstehen deshalb keine Klebeffekte, die zu unerwünschten Farbübertragungen vom Farbträgerband auf die Bildempfangsschicht führen. Dadurch kann auch im Thermotransferverfahren eine bildpunktweise Farbübertragung z.B. mittels Nadeln erfolgen. Sowohl bei Verwendung der Thermosublimation wie beim Thermotransfer erfolgt eine deutliche, kontrollierte Farbübertragung. Ein weiterer Vorteil des erfindungsgemäßen tragbaren Datenträgers besteht darin, daß auch eine über die graphische Information zu deren Schutz aufgebrachte Deckschicht gut an der Bildempfangsschicht haftet. Durch Aufbau der Bildempfangsschicht in einem mehrlagigen Schichtenverbund aus Trägerschicht und Akzeptorschicht läßt sich der erfindungsgemäße tragbare Datenträger problemlos auf zur Datenträgerherstellung übliche Kernschichten laminieren. Die Laminiereigenschaften der Bildempfangsschicht werden von der Trägerschicht bestimmt und nicht von der Beschaffenheit der Akzeptorschicht beeinflußt. Indem die Bildaufnahmeschicht wesentlich auf PETG basiert, besitzt sie zudem eine gute Langzeitstabilität, und ist gut recyclebar und damit umweltverträglich.

In besonders vorteilhafter Weise läßt sich die Bildempfangsschicht des erfindungsgemäßen Datenträgers durch Coextrusion eines ersten Ausgangsstoffes in Form reinen PETGs sowie eines zweiten Ausgangsstoffes in Form eines Gemisches von PETG mit wenigstens 10 Gew.-% eines Polymers aus der Gruppe der Polystyrole herstellen. Die durch Coextrusion erhaltene Folie ist ohne besondere Zusatzmaßnahmen gut weiterverarbeitbar und erleichtert dadurch die Umsetzung des erfindungsgemäßen Verfahrens.

Vorteilhaft ist das in der Akzeptorschicht enthaltene Styrolpolymer ein Polymer aus der Gruppe der Styrol-Copolymere. Besonders bevorzugt ist es Acrylnitril-Styrol-Acrylester (ASA). Dessen Gebrauch wird von der Ausführung der Bildempfangsschicht als Schichtenverbund unterstützt, in dem die Akzeptorschicht anteilig dünn gehalten werden kann. Dadurch läßt sich vor allem der unerwünschte Einfluß der farblichen Beschaffenheit von ASA - es besitzt eine etwas gelbliche Eigenfarbe - minimieren.

Ein Ausführungsbeispiel der Erfindung wird nachfolgend anhand der Zeichnung näher erläutert.

Die Figur zeigt einen Querschnitt durch eine auf einem tragbaren Datenträger aufgebrachte Bildempfangsschicht.

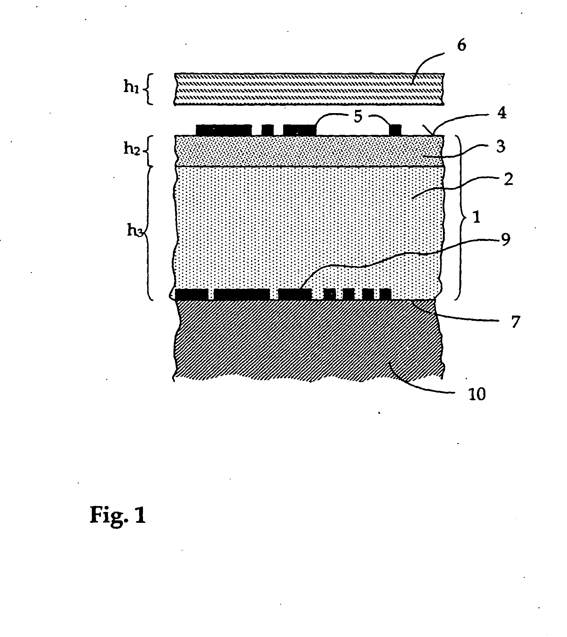

Figur 1 zeigt eine zweilagige Bildempfangsschicht 1 mit einer transparenten Trägerschicht 2 und einer gleichfalls transparenten Akzeptorschicht 3. Auf die Oberfläche 4 der Akzeptorschicht 3 ist eine graphische Information 5 in Form von alphanumerischen Zeichen und/oder freigestalteten Bildelementen aufgebracht. Über der Oberfläche 4 mit der graphischen Information 5 liegt eine Deckschicht 6, die in der Figur der besseren Anschaulichkeit wegen getrennt von der Oberfläche 4 dargestellt ist. An der Unterseite 7 ist die Bildempfangsschicht 1 mit einer Kernschicht 10 eines nicht weiter gezeigten tragbaren Datenträgers verbunden. Auf die Kernschicht 7 ist eine Designinformation 9 in Form eines graphischen Musters und/oder alphanumerischer Zeichen aufgebracht. Die Designinformation 9 ist durch die darüberliegenden, transparenten Schichten 1, 6 hindurch sichtbar. Sie ist zweckmäßig schwer nachahmbar und bildet ein Sicherheitsmerkmal, das die Echtheit des Datenträgers bestätigt. Bildempfangsschicht 1, Deckschicht 6 und Kernschicht 10 werden separat bereitgestellt, um durch geeignete Verbindungstechniken zusammengefügt zu werden. Typischweise liegen die Schichten 1 und 10 zunächst als Folien vor, die erst auf die Geometrie des tragbaren Datenträgers zugeschnitten und dann zusammengefügt werden; alternativ erfolgt das Zusammenfügen vor dem Zuschneiden. Die Deckschicht 6 kann ebenfalls als dünne Folie vorliegen oder wird als Lack aufgebracht.

Der tragbare Datenträger, auf dessen Kernschicht 10 die Bildempfangsschicht 1 aufgebracht wird, ist typischerweise eine übliche Scheckkarte, Geldkarte, Bankkarte, Ausweis, Führerscheinkarte, Datenseite für ein Paßbuch, SIM-Karte oder eine vergleichbare Chip-, Smart- oder IC-Karte im Scheckkarten- oder einem anderen gebräuchlichen Kartenformat, auf der sich eine Identitäts- oder eine sonstige einem Herausgeber oder einem Nutzer zugeordnete bildliche oder textuelle Information befindet. Unter tragbarem Datenträger sollen daneben auch andere personenbezogene Gegenstände mit zumindest einer planen Oberfläche und einer vergleichbaren Funktionalität verstanden werden wie etwa Armreife. Im folgenden wird als Ausführungsform für den tragbaren Datenträger eine Ausführung als Ausweiskarte im Kreditkartenformat zugrundegelegt. Ausweiskarten dieser Art und ihre Herstellung sind hinlänglich bekannt, etwa aus dem "Handbuch der Chipkarten" W. Rankl, W. Effing, Hansa-Verlag München, 4. Auflage. Sie beinhalten insbesondere eine Kernschicht 10, die einlagig ausgebildet sein kann, vorzugsweise aber ein Laminat aus mehreren Teillagen ist. Die Kernschicht 10 basiert vorzugsweise auf Polykarbonat oder auf Polyester und hat eine Stärke von typischerweise 600 µm.

Die auf der Kernschicht 10 angeordnete Designinformation 9 wird durch ein übliches, bekanntes Verfahren aufgebracht, wie sie gleichfalls beispielsweise aus dem erwähnten "Handbuch der Chipkarten" entnehmbar sind. Die Designinformation 9 kann nur auf einen Datenträger bezogen sein, etwa in Form eines geometrischen Musters, kann aber auch nutzerindividuell ausgestaltet sein, etwa durch Wiedergabe eines Fotos eines Nutzers. Bei mehrschichtigem Aufbau der Kernschicht 10 kann die Designinformation 9 ohne weiteres auch unter einer transparenten Oberflächenschicht der Kernschicht 10 liegen.

Die graphische Information 5 wird durch farbige Bildpunkte gebildet, die durch ein Verfahren der Transferthermographie von einem Farbträgerband auf die Oberfläche 4 übertragen werden. Zum Einsatz kommt ein übliches Thermotransfer- oder ein übliches Thermosublimationsverfahren, wie es etwa in dem "Handbuch der Printmedien" H. Kipphahn, Springer Verlag Heidelberg, 2000, Kapitel 5.6 beschrieben ist. Die graphische Information 5 kann insbesondere ein Farbfoto beinhalten.

Grundmaterial der Trägerschicht 2 ist ein amorpher Polyester. In Betracht kommt insbesondere PETG, d.h. ein modifiziertes Polyeethylenterephthalat, wie es z.B. in der eingangs erwähnten EP 0 734 322 B1 beschrieben ist. Alternativ kann die Trägerschicht 2 aus reinem Polyester oder anderen Polyester-Modifikationen bestehen. In einer weiteren Variante kann die Trägerschicht 2 auch aus Polycarbonat bestehen. Die Trägeschicht 2 besitzt eine Höhe h₃ von typischerweise 100 µm.

Ausgangsmaterial der Akzeptorschicht 3 ist ebenfalls PETG, dem im Unterschied zur Trägerschicht 2 jedoch mit einem Anteil von wenigstens 10 % Gew.-% ein Polymer aus der Gruppe der amorphen Styrolpolymere beigemischt ist. In Betracht kommen dabei diejenigen Polymere, die in einer Mischung mit PETG transparent sind und die für Datenträger geforderten mechanischen Eigenschaften aufweisen. Dies trifft insbesondere für Styrol-Copolymere aus der Gruppe der Acrylnitril-Styrol-Acrylester (ASA) zu. Transparent ist auch monomeres Polystyrol; allerdings ist dieses sehr spröde und für Anwendungen in Datenträgern deshalb weniger geeignet. Nicht als Beimischung geeignet sind auf der anderen Seite opake Polymere, insbesondere das nicht transparente ABS. Der Styrolpolymeranteil in der Akzeptorschicht 3 kann bis zu 90 % betragen. Das genaue Mischungsverhältnis hängt von der tatsächlichen chemischen Beschaffenheit des verwendeten Styrolpolymers ab, bei Verwendung von ASA z.B. davon, in welchem Verhältnis die in ASA enthaltenen Einzelkomponenten zueinander stehen. Weiter hängt das genaue Mischungsverhältnis davon ab, mittels welcher Transferthermographietechnik - Thermotransfer oder Thermosublimation - der Transfer der graphischen Information 5 erfolgt und welches Farbmaterial zur Erzeugung der Bildpunkte übertragen wird. Als Richtwert bei Einsatz der Thermosublimation hat sich ein Anteil von 70 Gew.-% Styrolpolymer in der Akzeptorschicht 3 bewährt. Die Akzeptorschicht 3 ist dünner als die Trägerschicht 2 und besitzt eine Höhe h₂ von typischerweise 10 um.

Der Akzeptorschicht 3 und der Trägerschicht 2 kann zur Verbesserung der Verarbeitbarkeit der Bildempfangsschicht 1 bei der Folienherstellung und bei der Kartenherstellung jeweils ein Gleit- und/ oder Antiblockmittel beigefügt sein. Indem es Anhaften verhindert, erleichtert das Gleit- und/ oder Antiblockmittel die Handhabung einer als Folie vorliegenden Bildempfangsschicht 1 vor dem Laminieren. Weiter verbessert es die Laminierbarkeit der Bildempfangsschicht 1 mit der Kernschicht 10 und unterstützt die Aufbringung der graphischen Information 5, indem es bei der Transferthermographie das Anhaften der Akzeptorschicht 3 verhindert.

Die Deckschicht 6 dient vor allem zum Schutz der graphischen Information 5. Sie ist transparent und besitzt eine geringe Höhe h₁ von typischerweise 3 bis 25 µm. Die Deckschicht 6 wird nach Aufbringen der graphischen Information 5 durch gleichzeitige Anwendung von Wärme und Druck aufgebracht. Zweckmäßig erfolgt die Aufbringung der Deckschicht 6 unmittelbar nach dem Aufbringen der graphischen Information 5 z B. in einem üblichen "Hotstamping"-Prozeß bei einer Temperatur von 100 bis 190°. Als Grundmaterial der Deckschicht 6 kommt ein Lack in Betracht, wie er beispielsweise von der Firma DATACARD unter der Bezeichnung "Topcoat" erhältlich ist. Möglich ist auch die Verwendung einer z.B. 25 µm dünnen Folie aus PET.

Die Bildempfangsschicht 1 wird als Schichtenverbund in Form einer einzelnen Folie bereitgestellt. Diese Folie wird durch Coextrusion von Polymerschmelzen der Ausgangsmaterialien für die Trägerschicht 2 und für die Akzeptorschicht 3 in einer Anlage mit wenigstens 2 Extrudern gewonnen. Die Polymerschmelzen aus dem Extruder für die Trägerschicht 2 und dem Extruder für die Akzeptorschicht 3 werden in einer einzelnen Düse zusammengeführt; alternativ werden sie aus zwei Düsen ausgegeben und anschließend unmittelbar zusammengewalzt. Die Prinzipien der jeweils zugrundeliegenden Folienherstellung sind an sich bekannt und etwa in dem Buch "Kunststoff-Folien, J. Mendwick, Carl Hanser Verlag München, 1994, insb. Kapitel 3.2.2 und 3.2.8 beschrieben. Das Prinzip der zweidüsigen Ausgabe mit nachfolgendem Walzen ist ferner auch in der eingangs genannten EP 0 734 322 erläutert.

Mit der vorgeschlagenen Bildempfangsschicht 1 läßt sich eine Ausweiskarte wie folgt herstellen. Es wird eine Kernschicht 10 bereitgestellt, die typischerweise durch Laminieren mehrerer Einzellagen erzeugt wurde. Weiterhin wird durch Coextrusion von Trägerschicht 2 und Akzeptorschicht 3 die Bildempfangsschicht 1 erzeugt und bereitgestellt. Bildempfangsschicht 1 und Kernschicht 10 werden sodann durch einen weiteren Laminierschritt miteinander verbunden, wobei die Verbindung so erfolgt, daß die Trägerschicht 2 zwischen der Akzeptorschicht 3 und der Kernschicht 10 liegt. Die Laminierschritte erfolgen mit für die Herstellung von Ausweiskarten üblichen Laminierparametem. Auf den so vorbereiteten Ausweiskartenkörper wird anschließend durch Transferthermographie die graphische Information 5 aufgebracht. Nachfolgend wird in einem "Hotstamping"-Schritt die Deckschicht 6 auf die Oberfläche 4 mit der graphischen Information 5 aufgebracht.

Unter Beibehaltung des grundlegenden Gedankens, eine durch Coextrusion gewonnene zweilagige, transparente Bildempfangsschicht 1 auf Basis von PETG zu verwenden, wobei die Akzeptorschicht 3 aus einem Gemisch von PETG mit einem Polymer aus der Gruppe der amorphen Styrolpolymere besteht, gestattet die Erfindung eine Vielzahl von sachgemäßen Ausgestaltungen. So können Bildempfangsschichten 1 selbstverständlich auf zwei Seiten einer Kernschicht 10 angeordnet und jeweils mit graphischer Information 5 versehen sein. Trägerschicht 2 und Akzeptorschicht 3 können weiter auch jeweils mehrlagig ausgeführt sein, wobei die mehreren Lagen analog zum zweilagigen Aufbau coextrudiert werden. Einzelnen Lagen können ferner Zusatzstoffe zur Erzielung bestimmter gewünschter Materialeigenschaften, etwa erhöhter Härte oder erhöhter Elastizität, beigefügt sein.

## Patentansprüche

1. Mehrlagig ausgebildeter tragbarer Datenträger mit einer Kernschicht und einer Bildempfangsschicht, auf die durch Transferthermographie eine graphische Information aufgebracht ist, **dadurch gekennzeichnet, daß** die Bildempfangsschicht (1) transparent ist und eine Trägerschicht (2) aus PETG sowie eine Akzeptorschicht (3) aus einem Gemisch von PETG mit einem Anteil von 10 Gew.-% bis 90% eines Polymers aus der Gruppe der amorphen Styrol-Copolymere umfaßt, und auf der Kernschicht (10) eine Designinformation (9) ausgebildet ist, die durch die Bildempfangsschicht (1) hindurch sichtbar ist.

2. Tragbarer Datenträger nach Anspruch 1 **dadurch gekennzeichnet, daß** die Bildempfangsschicht (1) auf einer Kernschicht (10) aus Polyester angeordnet ist.

3. Tragbarer Datenträger nach Anspruch 1, **dadurch gekennzeichnet, daß** auf die Oberfläche (4) der Akzeptorschicht (3) eine transparente Deckschicht (6) aufgebracht ist.

4. Tragbarer Datenträger nach Anspruch 1 **dadurch gekennzeichnet, daß** die Bildempfangsschicht (1) als Schichtenverbund ausgebildet ist, der als eine einzelne, durch Coextrusion hergestellte Folie ausgebildet ist.

5. Tragbarer Datenträger nach Anspruch 1 **dadurch gekennzeichnet, daß** das in der Akzeptorschicht (3) enthaltene Styrolpolymer ein Polymer aus der Gruppe der Styrol-Copolymere, insbesondere Acrylnitril-Styrol-Acrylester (ASA) ist.

6. Tragbarer Datenträger nach Anspruch 1 **dadurch gekennzeichnet, daß** Bildempfangsschicht (1) eine Gesamthöhe von 80 bis 120 µm aufweist, wovon eine Höhe (h₂) 5 bis 20 µm auf die Akzeptorschicht (3) entfällt.

7. Tragbarer Datenträger nach Anspruch 1 **dadurch gekennzeichnet, daß** der Akzeptorschicht (3) ein Gleit- und/ oder Antiblockmittel zugesetzt ist.

8. Tragbarer Datenträger nach Anspruch 1 **dadurch gekennzeichnet, daß** die Trägerschicht (2) aus Polycarbonat besteht.

9. Verfahren zur Herstellung eines tragbaren Datenträgers, insbesondere einer Ausweiskarte, auf den durch Transferthermographie eine graphische Information aufgebracht werden kann, **gekennzeichnet durch** folgende Schritte:
- Bereitstellen einer Kernschicht (10) auf Polyester- oder Polycarbonatbasis,
- Ausbilden einer Designinformation (9) auf der Kernschicht (10),
- Bereitstellen eines ersten, im wesentlichen PETG enthaltenen Ausgangsmaterials,
- Bereitstellen eines zweiten, ein Gemisch aus PETG und wenigstens 10 Gew. -% bis 90 Gew.-% eines Polymers aus der Gruppe der amorphen Styrolpolymere enthaltenden Ausgangsmaterials, wobei aus dieser Gruppe ABS ausgenommen ist,
- Coextrudieren der beiden Ausgangsmaterialien zu einer transparenten Bildempfangsschicht (1),
- Laminieren der Bildempfangsschicht (1) und der Kernschicht (10), so daß die Trägerschicht (2) zwischen der Akzeptorschicht (3) und der Kernschicht (10) liegt.

## Claims

1. A portable data carrier of a multilayer configuration, with a core layer and an image-receiving layer, on which graphic information is applied by transfer thermography, **characterized in that** the image-receiving layer (1) is transparent and comprises a carrier layer (2) of PETG, as well as an acceptor layer (3) of a blend of PETG with a proportion of 10 weight-% to 90 % of a polymer from the group of amorphous styrene copolymers, and there is formed on the core layer (10) a design information item (9) which is visible through the image-receiving layer (1).

2. The portable data carrier according to claim 1, **characterized in that** the image-receiving layer (1) is disposed on a core layer (10) of polyester.

3. The portable data carrier according to claim 1, **characterized in that** a transparent cover layer (6) is applied on the surface (4) of the acceptor layer (3).

4. The portable data carrier according to claim 1, **characterized in that** the image-receiving layer (1) is configured as a layer composite which is configured as a single foil produced by coextrusion.

5. The portable data carrier according to claim 1, **characterized in that** the styrene polymer contained in the acceptor layer (3) is a polymer from the group of styrene copolymers, in particular acrylonitrile styrene acrylic ester (ASA).

6. The portable data carrier according to claim 1, **characterized in that** the image-receiving layer (1) has an overall height of 80 to 120 µm, of which a height (h₂) of 5 to 20 µm is allotted to the acceptor layer (3).

7. The portable data carrier according to claim 1, **characterized in that** a lubricant and/ or antiblocking agent is added to the acceptor layer (3).

8. The portable data carrier according to claim 1, **characterized in that** the carrier layer (2) is made of polycarbonate.

9. A method for producing a portable data carrier, in particular an identification card, on which graphic information can be applied by transfer thermography, **characterized by** the following steps of:
- supplying a core layer (10) on a polyester basis or polycarbonate basis,
- forming a design information (9) on the core layer (10),
- supplying a first source material substantially containing PETG,
- supplying a second source material containing a blend of PETG and at least 10 weight-% to 90 weight-% of a polymer from the group of amorphous styrene polymers, wherein ABS is excluded from this group,
- coextruding the two source materials to form a transparent image-receiving layer (1),
- laminating the image-receiving layer (1) and the core layer (10), so that the carrier layer (2) lies between the acceptor layer (3) and the core layer (10).

## Revendications

1. Support de données portable réalisé sous forme multicouche, comprenant une couche noyau et une couche réceptrice d'image sur laquelle une information graphique est appliquée par thermotransfert, **caractérisé en ce que** la couche réceptrice d'image (1) est transparente et comprend une couche support (2) de PETG ainsi qu'une couche acceptrice (3) composée d'un mélange de PETG comportant une proportion de 10 pourcent à 90 pourcent par poids d'un polymère du groupe des copolymères de styrène amorphes, et **en ce qu'**une information design (9) visible à travers la couche réceptrice d'image (1) est réalisée sur la couche noyau (10).

2. Support de données portable selon la revendication 1, **caractérisé en ce que** la couche réceptrice d'image (1) est agencée sur une couche noyau (10) composée de polyester.

3. Support de données portable selon la revendication 1, **caractérisé en ce qu'**une couche de recouvrement (6) transparente est appliquée sur la surface (4) de la couche acceptrice (3).

4. Support de données portable selon la revendication 1, **caractérisé en ce que** la couche réceptrice d'image (1) est réalisée sous forme de composite feuilleté qui est réalisée sous forme d'une feuille unique fabriquée par co-extrusion.

5. Support de données portable selon la revendication 1, **caractérisé en ce que** le polymère de styrène contenu dans la couche acceptrice (3) est un polymère du groupe des copolymères de styrène, notamment acrylonitrile-styrène-acrylester (ASA).

6. Support de données portable selon la revendication 1, **caractérisé en ce que** la couche réceptrice d'image (1) présente une hauteur totale de 80 à 120 µm, dont une hauteur (h₂) de 5 à 20 µm revient à la couche acceptrice (3).

7. Support de données portable selon la revendication 1, **caractérisé en ce qu'**un agent lubrifiant et/ou anti-bloquant est ajouté à la couche acceptrice (3).

8. Support de données portable selon la revendication 1, **caractérisé en ce que** la couche support (2) consiste en du polycarbonate.

9. Procédé de fabrication d'un support de données portable, notamment d'une carte d'identité, sur lequel une information graphique peut être appliquée par thermotransfert, **caractérisé par** les étapes suivantes :
- mise à disposition d'une couche noyau (10) à base de polyester ou de polycarbonate,
- réalisation d'une information design (9) sur la couche noyau (10),
- mise à disposition d'un premier matériau de départ contenant essentiellement du PETG,
- mise à disposition d'un second matériau de départ contenant un mélange de PETG et au moins 10 pourcent à 90 pourcent par poids d'un polymère du groupe des polymères de styrène amorphes, l'ABS étant exclu de ce groupe,
- co-extrusion des deux matériaux de départ de manière à obtenir une couche réceptrice d'image (1) transparente,
- laminage de la couche réceptrice d'image (1) et de la couche noyau (10), de telle manière que la couche support (2) se trouve entre la couche acceptrice (3) et la couche noyau (10).
